# EUROPEAN PATENT SPECIFICATION

(11) **EP 0 370 368 B1**
(45) Date of publication and mention of the grant of the patent: **15.09.1993**
(21) Application number: 89121073.4
(22) Date of filing: 14.11.1989
(51) Int. Cl.: B62J 9/00

(54) **Bag, suitcase and the like for coupling to motorcycles**
Tasche, Koffer und ähnliches zum Befestigen an Motorrädern
Sac, valise et similaires se fixant aux motocyclettes

(30) Priority: 25.11.1988 IT 2274888
(43) Date of publication of application: 30.05.1990
(73) Proprietor: Visenzi, Giuseppe, I-25100 Brescia (IT)
(72) Inventor: Visenzi, Giuseppe, I-25100 Brescia (IT)
(74) Representative: Modiano, Guido, Dr.-Ing.

(56) References cited:
- DE-A- 3 151 794
- DE-A- 3 716 445
- GB-A- 2 074 521
- NL-A- 7 313 496

## Description

The present invention relates to a bag, suitcase and the like for coupling to motorcycles.

As is known, bags, suitcases and the like, structured so as to be removably applicable to a motorcycle, so as to allow the user to remove the bag from the motorcycle when required, have been commercially available for a long time.

In the known embodiments, two distinct assemblies are usually provided, each having an own actuation lock, for disengaging the bag from the motorcycle and respectively for opening the bag.

An example of a bag with an actuation lock for opening and closing the bag is disclosed in DE-A-3716445 issued to Bayerische Motoren Werke AG. This document describes a locking device in form of a clamp, which by means of a spring, is able to close the bag without first unlocking the said bag.

This causes considerable constructive complexities and practical difficulties in use which are not positively accepted by the users.

The aim of the invention is indeed to eliminate the above described disadvantages by providing a bag, suitcase and the like which has improved means for closing the bag and for coupling the bag itself to motorcycles, so as to make the actuation of said bag extremely rapid and easy while offering the possibility of using a single lock which controls both the means of application to the motorcycle and the means for opening the bag.

Within the scope of the above described aim, a particular object of the invention is to provide a bag, suitcase and the like in which the closing means and the means for coupling to the motorcycle integrate in a single actuation assembly, with a reduction in bulk and with considerable constructive simplifications, without thereby limiting its functionality.

Another object of the present invention is to provide a bag, suitcase and the like in which the actuation can be performed in a rapid and simple manner and in which it is possible to couple the bag to the motorcycle even when the lock element is already preset in closed position.

Not least object of the present invention is to provide a bag, suitcase and the like which can be easily obtained starting from commonly commercially available elements and materials and is furthermore competitive from a merely economical point of view.

The above described aim, the objects mentioned and others which will become apparent hereinafter are achieved by a bag, suitcase and the like for coupling to motorcycles, as defined in claim 1.

The characteristics and advantages will become apparent from the description of a preferred but not exclusive embodiment of a bag, suitcase and the like according to the invention, illustrated only by way of non-limitative example in the accompanying drawings, wherein:

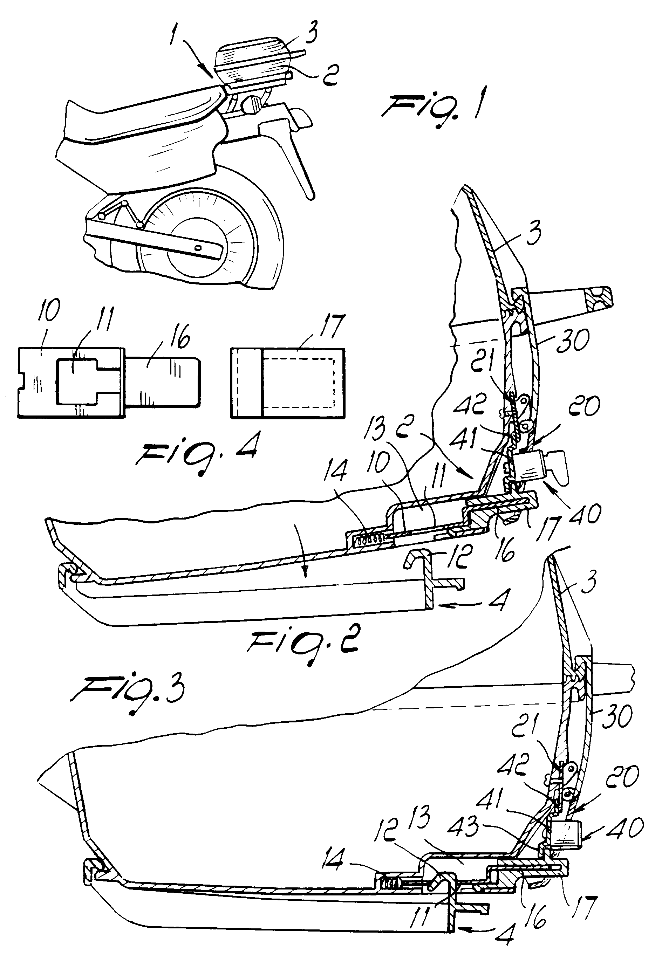

figure 1 is a schematic view of the bag, suitcase and the like according to the invention, applied to a motorcycle;
figure 2 is a schematic sectional view of the step of coupling the bag to the supporting plate of a motorcycle, with the lock element in closed position;

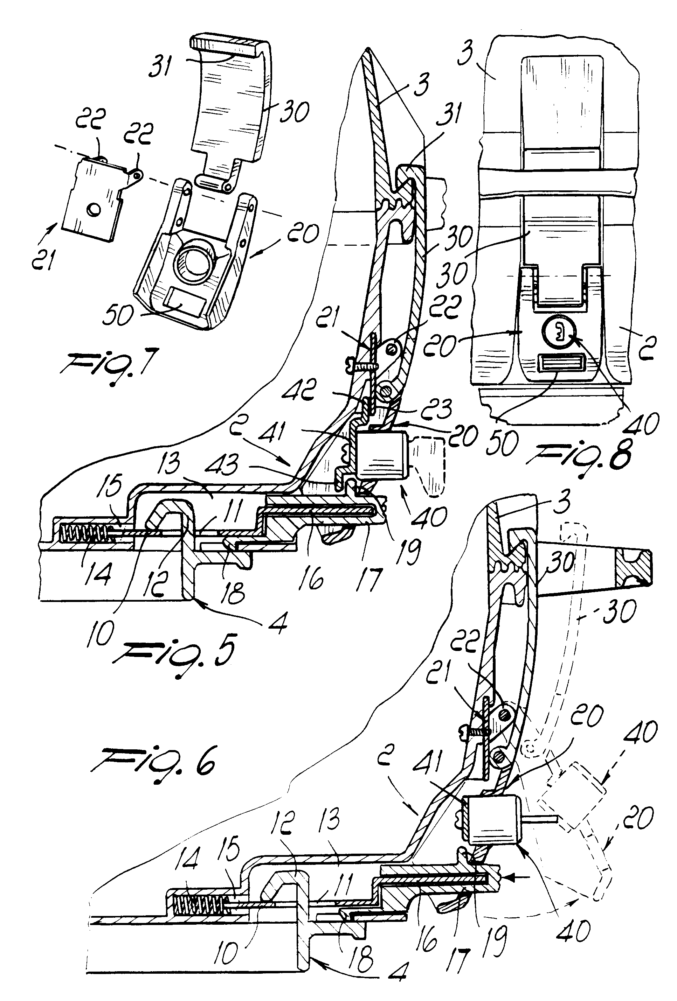

figure 3 is a schematic sectional view of the bag, illustrating the movement between the small plate and the button element;
figure 4 is an exploded view of the small plate and of the button;
figure 5 is an enlarged-scale sectional detail view of the means for closing and for coupling to the motorcycles with the lock element in closed position;
figure 6 is a sectional view of the closing and coupling means, with the lock element in open position, illustrating in broken lines the opening of the suitcase closing means;
figure 7 is a schematic perspective and exploded view of the closure means;
figure 8 is a rear view of the detail of the closure means applied to the bag, suitcase and the like.

With reference to the above described figures, the bag, suitcase and the like for coupling to motorcycles, according to the invention, comprises a substantially rigid body which is generally indicated by the reference numeral 1; said body 1 is defined by a lower half-shell 2 and by an upper half-shell 3 which are pivoted to one another.

The body 1, and more precisely the lower shell 2, defines means for removably coupling the bag to a supporting plate 4 which is fixed to a motorcycle in a per se known manner.

Said coupling means comprise a small plate 10 which defines a middle opening 11 in which a hook-like portion 12, protruding from the supporting plate 4, may be removably inserted.

Said small plate 10 is slidably accommodated in a recess 13 defined by the lower shell 2, and its end acts against a return spring 14 accommodated in a seat 15 defined by the half-shell.

At the opposite edge, the small plate 10 defines a tang 16 which slidably inserts in a button element 17 which is slidably guided in the recess 13 and has a stop tooth 18 cooperating with a portion of the lower shell 2 to prevent an accidental extraction of the button 17.

The fact that the tang 16 of the small plate 10 is slidable with respect to the button element allows the bag to be coupled to the supporting plate 4 even when the lock element is in closed position, as will become apparent hereinafter.

The bag furthermore comprises means for closing the half-shells 2 and 3 which comprise a lever 20 articulated, at its end, to a bracket 21 which is fixed to the half-shell.

More in detail, the bracket 21 is provided with a pair of opposite lugs 22 which define the support for the pivoting pin of the lever 20 and is downwardly provided with a protruding tab 23.

An engagement arm 30 is articulated to a middle portion of the lever 20 and ends with an engagement tooth 31 which can engage the upper half-shell 3 so as to close it.

An important peculiarity of the invention resides in that there is a single lock element, generally indicated by the reference numeral 40, which is supported by the lever 20 and actuates a single bolt 41 which has a first end 42 insertable below the protruding tab 23 to prevent the opening of the bag closure means and a second end 43 which acts as a stop element for a projection 19 which upwardly protrudes from the button 17 to prevent its movement in the direction which allows the disengagement of the hook 12 from the small plate 10 (to the left in the figures).

Another important characteristic resides in that the button 17 passes through a port 50 (figures 7, 8) defined at the free end of the lever, so that said button can be actuated with the lever in closed position.

As illustrated in figures 5 and 6, by virtue of the presence of the bolt 41, the single lock element 40 allows, in closed position, to prevent both the actuation of the coupling means, since the button 17 cannot be moved, and the actuation of the lever closure means, since the lever 20 cannot rotate as the end 42 is retained by the protruding tab 23 and consequently does not allow the disengagement of the engagement tooth 31 from the upper half-shell 3.

When the lock element is in open position, as illustrated in figure 6, it is possible to act independently and separately on the coupling means, by acting on the button 17, and on the closure means, by rotating the lever 20.

From what has been described it can thus be seen that the invention achieves the proposed aim and objects, and in particular the fact is stressed that a bag, suitcase and the like is provided in which the closure means and the coupling means can both be actuated by a single key which allows to simultaneously lock the closure means and the coupling means.

With the described arrangement it is furthermore possible to couple the bag to the supporting plate 4 even when the lock element is in closed position, since the small plate 10 is slidably associated with the button 17 so that said small plate, when pressed against the inclined end of hook 12, slides to perform the coupling.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A bag, suitcase and the like for coupling to motorcycles, comprising a substantially rigid body (1) provided with coupling means (10,17) for removably connecting the body to a supporting plate (4) and comprising two mutually pivoted half-shells (2,3) which are provided with mutual closure means (20,30,31), characterized in that said coupling means comprise a button element (17) which is operatively associated with a small plate (10) which is removably associable with a hook-like portion (12) of said supporting plate (4), said closure means having a lever (20) which is articulated to an engagement arm (30) for mutually locking said half-shells (2,3), a single lock element (40) being furthermore provided which is supported by said lever (20) and is adapted to interact with said button element (17) and with said lever to prevent their actuation when said lock element is in closed position.

2. A bag, suitcase and the like, according to claim 1, characterized in that said small plate (10) of said coupling means (10,17) is slidably associated with said button (17), so that said coupling means (10,17) allows the coupling to said hook-like portion (12) even when said lock element (40) is in closed position

3. A bag, suitcase and the like, according to the preceding claims, characterized in that said small plate (10) defines an opening (11) for the insertion of said hook-like portion (12) and is provided, at one edge, with a tang (16) which is slidably insertable in said button element (17).

4. A bag, suitcase and the like, according to any of the preceding claims, characterized in that said button element (17) is slidably supported by said body (1) and is provided with a stop tooth (18) to prevent its extraction from an accommodation recess (13) of said coupling means (10,17).

5. A bag, suitcase and the like, according to any of the preceding claims, characterized by a bracket (21) which is fixed to said body (1) and is provided with a pair of opposite lugs (22) for supporting the pivoting pin of said lever (20), said bracket having a protruding lower tab (23) which interacts with said lock element (40).

6. A bag, suitcase and the like, according to any of the preceding claims, characterized in that said engagement arm (30) is articulated to a middle portion of said lever (20) and has, at the end opposite to its articulation end, an engagement tooth (31) associable with the half-shell (3) which is opposite to the half-shell (2) which supports said lever (20).

7. A bag, suitcase and the like, according to any of the preceding claims, characterized in that said lock element (40) is operatively connected to a bolt (41) which has a first end adapted to interact with said protruding tab (23) of said bracket (21) and a second end adapted to act as stop element for a projection (19) formed on said button element (17).

8. A bag, suitcase and the like, according to any of the preceding claims, characterized by a single key for the actuation of said closure means (20,30,31) and said coupling means (10,17).

## Patentansprüche

1. Tasche, Koffer und dergleichen zur Befestigung an Motorrädern, mit einem im wesentlichen steifen Körper (1), der mit einer Verbindungsvorrichtung (10,17) zur lösbaren Verbindung des Körpers mit einer Trägerplatte (4) versehen ist, und mit zwei zueinander schwenkbar gelagerten Halbschalen (2,3), die mit einander Zugeordneten Verschlußmitteln (20,30,31) versehen sind, **dadurch gekennzeichnet**, daß die Verbindungsvorrichtung ein Knopfelement (17) aufweist, welches mit einer kleinen Platte (10) in Wirkverbindung steht, die mit einem hakenähnlichen Abschnitt (12) der Trägerplatte (4) lösbar verbindbar ist, daß die Verschlußmittel zum gegenseitigen Verriegeln der Halbschalen (2,3) einen mit einem Eingriffsarm (30) gelenkig verbundenen Hebel (20) hat, und daß ferner ein einzelnes Verriegelungselement (40) vorgesehen ist, welches durch den Hebel (20) gehalten und derart ausgelegt ist, daß es mit dem Knopfelement (17) und dem genannten Hebel zusammenwirkt und deren Betätigung verhindert, wenn es sich in der Schließstellung befindet.

2. Tasche, Koffer und dergleichen nach Anspruch 1, **dadurch gekennzeichnet**, daß die kleine Platte (10) der Verbindungsvorrichtung (10,17) verschiebbar mit dem Knopf (17) verbunden ist, so daß die Verbindungsvorrichtung (10,17) die Verbindung mit dem hakenähnlichen Bereich (12) auch dann erlaubt, wenn sich das Verriegelungselement (40) in seiner Schließstellung befindet.

3. Tasche, Koffer und dergleichen nach einem der vorhergehenden Ansprüche, **dadurch gekennzeichnet**, daß die kleine Platte (10) eine Öffnung (11) für das Einführen des hakenähnlichen Abschnitts (12) begrenzt und an einer Kante mit einem Band (16) versehen ist, das verschiebbar in das Knopfelement (17) eingesetzt werden kann.

4. Tasche, Koffer und dergleichen nach einem der vorhergehenden Ansprüche, **dadurch gekennzeichnet**, daß das Knopfelement (17) durch den Körper (1) verschiebbar gehalten und mit einem zahnförmigen Stopper (18) versehen ist, der verhindert, daß das Knopfelement (17) aus einer für dessen Aufnahme in der Verbindungsvorrichtung (10,17) vorgesehenen Aussparung (13) herausgezogen wird.

5. Tasche, Koffer und dergleichen nach einem der vorhergehenden Ansprüche, **gekennzeichnet durch** eine Halterung (21), die an dem Körper (1) befestigt und mit einem Paar einander gegenüberliegender Augen (22) zum Halten des Schwenkzapfens des Hebels (20) versehen ist, wobei die Halterung eine vorspringende untere Nase (23) hat, die mit dem Verschlußelement (40) interagiert.

6. Tasche, Koffer und dergleichen nach einem der vorhergehenden Ansprüche, **dadurch gekennzeichnet**, daß der Eingriffsarm (30) an einen mittleren Abschnitt des Hebels (20) angelenkt ist und an dem seinem Anlenkungsende gegenüberliegenden Ende einen Eingriffszahn (31) aufweist, der mit der Halbschale (3) verbunden werden kann, die der den Hebel (20) tragenden Halbschale (2) gegenüberliegt.

7. Tasche, Koffer und dergleichen nach einem der vorhergehenden Ansprüche, **dadurch gekennzeichnet**, daß das Verriegelungselement (40) betrieblich mit einem Bolzen (41) verbunden ist, der ein für die Interaktion mit der vorspringenden Nase (23) der Halterung (21) ausgelegtes erstes Ende und ein als Anschlagelement für einen an dem Knopfelement (17) ausgebildeten Vorsprung (19) wirkendes zweites Ende hat.

8. Tasche, Koffer und dergleichen nach einem der vorhergehenden Ansprüche, **gekennzeichnet durch** einen einzigen Schlüssel für die Betätigung der Verschlußmittel (20,30,31) und der Verbindungsvorrichtung (10,17).

## Revendications

1. Sac, valise et analogue se fixant aux motocyclettes, comportant un corps (1) sensiblement rigide équipé de moyens de fixation (10, 17) en vue d'une liaison amovible du corps à une plaque support (4) et comportant deux demi-coquilles (2, 3) articulées entre elles qui sont munies de moyens de fermeture mutuels (20, 30, 31), caractérisé en ce que lesdits moyens de fixation comportent un bouton (17) associé fonctionnellement à une plaquette (10) pouvant être associée de façon amovible à une partie formant crochet (12) de ladite plaque support (4), lesdits moyens de fermeture possédant un levier (20) qui est articulé à bras d'engagement (30) pour verrouiller mutuellement lesdites demi-coquilles (2, 3), un unique élément de verrouillage (40) étant en outre prévu qui est supporté par ledit levier (20) et est apte à interagir avec ledit bouton (17) et avec ledit levier pour empêcher leur actionnement lorsque ledit élément de verrouillage se trouve en position fermée.

2. Sac, valise et analogue selon la revendication 1, caractérisé en ce que ladite plaquette (10) desdits moyens de fixation (10, 17) est associée à coulissement avec ledit bouton (17), de sorte que lesdits moyens de liaison (10, 17) permettent la fixation à ladite partie formant crochet (12) même lorsque ledit élément de verrouillage (40) se trouve en position fermée.

3. Sac, valise et analogue selon les revendications précédentes, caractérisé en ce que ladite plaquette (10) définit une ouverture (11) pour l'introduction de ladite partie formant crochet (12) et est munie, sur un bord, d'un talon (16) pouvant être introduit à coulissement dans ledit bouton (17).

4. Sac, valise et analogue , selon l'une quelconque des revendications précédentes, caractérisé en ce que ledit bouton (17) est supporté à coulissement par ledit corps (1) et est muni d'une dent d'arrêt (18) pour empêcher son extraction d'un logement (13) desdits moyens de fixation (10, 17).

5. Sac, valise et analogue selon l'une quelconque des revendications précédentes, caractérisé par un support (21) fixé audit corps (1) et muni d'une paire de pattes opposées (22) pour supporter la tige de pivotement dudit levier (20), ledit support possédant une patte inférieure saillante (23) interagissant avec ledit élément de verrouillage (40).

6. Sac, valise et analogue selon l'une quelconque des revendications précédentes, caractérisé en ce que ledit bras d'engagement (30) est articulé à une partie médiane dudit levier (20) et possède, à l'extrémité opposée à son extrémité d'articulation, une dent d'engagement (31) pouvant être associée à la demi-coquille (3) qui est opposée à la demi-coquille (2) qui supporte ledit levier (20).

7. Sac, valise et analogue , selon l'une quelconque des revendications précédentes, caractérisé en ce que ledit élément de verrouillage (40) est relié fonctionnellement à un boulon (41) possédant une première extrémité apte à interagir avec ladite patte saillante (23) dudit support (21) et une seconde extrémité apte à agir en tant qu'élément d'arrêt pour une partie saillante (19) formée sur ledit bouton (17).

8. Sac, valise et analogue , selon l'une quelconque des revendications précédentes, caractérisé par une unique clé pour l'actionnement desdits moyens de fermeture (20, 30, 31) et desdits moyens de fixation (10, 17).
